# EUROPEAN PATENT APPLICATION

(11) **EP 4 366 006 A1**
(43) Date of publication of application: **08.05.2024**
(21) Application number: 22887657.9
(22) Date of filing: 27.10.2022
(51) Int. Cl.: H01M 10/04, H01M 10/0587

(54) **ELECTRODE ASSEMBLY AND SECONDARY BATTERY INCLUDING SAME**

(30) Priority: 27.10.2021 KR 20210144428
(71) Applicant: LG Energy Solution, Ltd., Seoul 07335 (KR)
(72) Inventor: LEE, Myung An, Daejeon 34122 (KR); RYU, Duk Hyun, Daejeon 34122 (KR)
(74) Representative: Goddar, Heinz J.
(86) International application number: PCT/KR2022/016602
(87) International publication number: WO 2023/075462

(57) **Abstract**

An electrode assembly according to one embodiment of the present disclosure includes: a cathode; an anode; and separators located between the cathode and the anode, wherein the separators include a first separator located on one surface of the cathode and a second separator located on one surface of the anode, wherein the cathode, the first separator, the anode, and the second separator are wound together to form a jelly-roll structure, and wherein based on the radial direction of the jelly-roll structure, a region in which the separators are overlapped in two or more layers exists between the edge part of the cathode and the anode.

## Description

### [TECHNICAL FIELD]

### Cross Citation with Related Application(s)

This application claims the benefit of Korean Patent Application No. 10-2021-0144428 filed on October 27, 2021 with the Korean Intellectual Property Office, the entire contents of which are incorporated herein by reference.

The present disclosure relates to an electrode assembly and a secondary battery including the same, and more particularly, to a jelly-roll type electrode assembly and a secondary battery including the same.

### [BACKGROUND]

Recently, the demand for portable electronic products such as notebooks, video cameras, cellular phones or the like has rapidly increased, and electric vehicles, energy storage batteries, robots, satellites or the like have been actively developed. Thereby, many studies have been conducted on the secondary battery used as its driving power source.

Meanwhile, the secondary battery includes, for example, a nickel cadmium battery, a nickel hydrogen battery, a nickel zinc battery, a lithium secondary battery, and the like. Among them, the lithium secondary batteries are widely used in the field of high-tech electronic devices because they have advantages, for example, hardly exhibiting memory effects in comparison with nickel-based secondary batteries and thus being freely charged and discharged, and having very low self-discharge rate, high operating voltage and high energy density per unit weight.

Depending on the shape of the battery case, a secondary battery is classified into a cylindrical battery where an electrode assembly is built into a cylindrical metal can, a prismatic battery where an electrode assembly is mounted in a prismatic metal can, and a pouch-type battery where an electrode assembly is mounted in a pouch type case formed of an aluminum laminate sheet.

The electrode assembly mounted in the battery case is an electricity-generating device enabling charge and discharge that has a cathode/separator/anode laminate structure, and is classified into a jelly-roll type, a stack type, and a stack/folding type. The jelly-roll type is a shape in which a cathode and an anode, each made of an active material-coated long sheet, is rolled with a separator interposed between them, the stack type is a shape in which a plurality of cathodes and a plurality of anodes each having a predetermined size are laminated in this order in a state where a separator is interposed therebetween, and a stack/folding type is a combination of a jelly-roll type and a stack type. Of these, the jelly-roll-type electrode assembly has advantages that manufacture is easy and the energy density per weight is high.

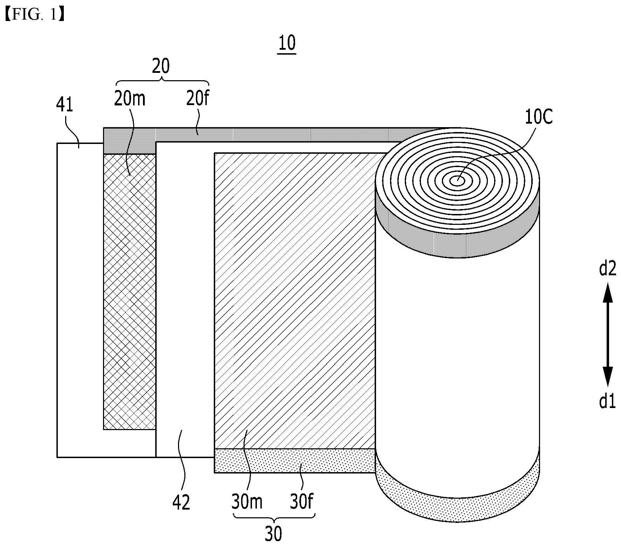

Fig. 1 is a perspective view showing a conventional jelly-roll type electrode assembly.

Referring to Fig. 1, a conventional jelly-roll type electrode assembly 10 inserted into a secondary battery includes a cathode 20, an anode 30, and a first separator 41 located on one surface of the cathode 20 and a second separator 42 located on one surface of the anode 30.

The cathode 20 may include a cathode current collector 20f and a cathode active material layer 20m provided by applying a cathode active material onto the cathode current collector 20f. A portion of the cathode current collector 20f where the cathode active material is not applied is located in the upward direction d2, thereby being able to form a current path without a separate cathode tab.

The anode 30 may include an anode current collector 30f and an anode active material layer 30m provided by applying an anode active material onto the anode current collector 30f. A portion of the anode current collector 30f on which the anode active material is not applied is located in the lower direction d1, thereby being able to form a current path without a separate anode tab.

As described above, it is possible to manufacture a tab-less electrode assembly that utilizes the cathode current collector 20f and the anode current collector 30f as current paths without attaching a cathode tab or an anode tab.

At this time, in the case of the cathode 20, the edge part corresponding to the end is not composed of only the cathode current collector, but is composed of the cathode current collector applied with the cathode active material, thus creating a so-called free edge. The jelly-roll electrode assembly 10 formed by winding the cathode 20 and the anode 30 repeats charge and discharge several times, whereby the cathode 20 and the anode 30 repeat expansion and contraction. At this time, the edge part of the cathode 20 to which the cathode active material is applied forms a step and, at the same time, applies pressure to the vicinity thereof due to contraction and expansion. That is, while contraction and expansion of the edge part of the cathode 20 are repeated, damage may be applied to the anode 30 or the first and second separators 41 and 42.

Meanwhile, an empty space is formed in the core 10C of the electrode assembly 10, wherein deformation of the core 10C may occur as the cathode 20 and the anode 30 repeat expansion and contraction. In particular, in the case of the tab-less electrode assembly 10, since it does not have a separate member for supporting the core 10C of the electrode assembly 10, such as a cathode tab or an anode tab, the problem of deformation of the core 10C may be more serious. When such a core deformation occurs excessively, stress may be concentrated in one place, which may cause disconnection and cracking of the cathode 20 or the anode 30.

Therefore, there is a need to develop a technology that can solve the above problems that the j elly-roll type electrode assembly 10 can have.

### [DETAILED DESCRIPTION OF THE INVENTION]

### [Technical Problem]

It is an object of the present disclosure to provide a jelly-roll type electrode assembly that can solve the edge-induced problem and core deformation problem of the cathode, and a secondary battery including the same.

However, the problem to be solved by embodiments of the present disclosure is not limited to the above-described problems, and can be variously expanded within the scope of the technical idea included in the present disclosure.

### [Technical Solution]

According to one embodiment of the present disclosure, there is provided an electrode assembly comprising: a cathode; an anode; and separators located between the cathode and the anode, wherein the separators include a first separator located on one surface of the cathode and a second separator located on one surface of the anode, wherein the cathode, the first separator, the anode, and the second separator are wound together to form a jelly-roll structure, and wherein based on the radial direction of the jelly-roll structure, a region in which the separators are overlapped in two or more layers exists between the edge part of the cathode and the anode.

Based on the radial direction of the jelly-roll structure, a region in which the separators are overlapped in three layers exists between the edge part of the cathode and the anode.

A first tape and a second tape may be attached to one surface of the first separator and one surface of the second separator, respectively. The first tape may be attached to a region between one end of the first separator and a point where the cathode is inserted. The second tape may be attached to a region between one end of the second separator and a point where the anode is inserted.

The first tape may be attached to a region spaced apart from one end of the first separator, and the second tape may be attached to a region spaced apart from one end of the second separator.

The first tape may be attached to one surface of both surfaces of the first separator in a direction opposite to a direction in which the second separator is located.

The second tape may be attached to one surface of both surfaces of the second separator in a direction opposite to the direction in which the first separator is located.

The first tape and the second tape may include an electrically insulating material.

Based on the radial direction of the jelly-roll structure, a two-layer first separator and a single layer second separator may be located between the edge part of the cathode and the anode.

The first separator may include a first folding part folded in a winding direction, and the first folding part may be overlap with other parts of the first separator to be wound together; and the second separator may include a second folding part folded in a winding direction, and the second folding part may be overlapped with other parts of the second separator to be wound together.

Based on the radial direction of the jelly-roll structure, the separators may be overlapped in three layers between the edge part of the cathode and the anode, and two layers of the three-layers separators overlapped between the edge part of the cathode and the anode may be the first folding part and the second folding part, respectively.

In the jelly-roll structure, the edge part of the anode may be located closer to the core of the j elly-roll structure than the edge part of the cathode.

The jelly-roll structure may have a wound shape in which the anode, the second separator, the cathode, and the first separator are arranged in this order.

Based on the radial direction of the jelly-roll structure, a region where the separators are overlapped in two or more layers may be located outside the edge part of the cathode.

The jelly-roll structure may be a wound shape in which the first separator, the cathode, the second separator, and the anode are arranged in this order.

Based on the radial direction of the jelly-roll structure, a region in which the separators are overlapped in two or more layers may be located inside the edge part of the cathode.

### [Advantageous Effects]

According to embodiments of the present disclosure, based on the radial direction of the jelly-roll structure formed by the electrode assembly, the separator is set to be located in two or more layers near the edge part of the cathode, thereby being able to solve the problem of damage caused by the edge part of the cathode or the problem of core deformation.

In addition, a tape is attached to a region adjacent to the core of the jelly-roll structure of each separator, thereby being able to supplement structural rigidity against core deformation.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view showing a conventional jelly-roll type electrode assembly;
Figs. 2 and 3 are diagrams schematically illustrating a process of winding an electrode assembly according to one embodiment of the present disclosure;
Fig. 4 is a plan view which enlarges and shows a core region of the electrode assembly manufactured by the process of Figs. 2 and 3;
Figs. 5 and 6 are diagrams schematically showing a process of winding an electrode assembly according to another embodiment of the present disclosure; and
Fig. 7 is a plan view which enlarges and shows a core region of the electrode assembly manufactured by the process of Figs. 5 and 6.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or **"comprising"** a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

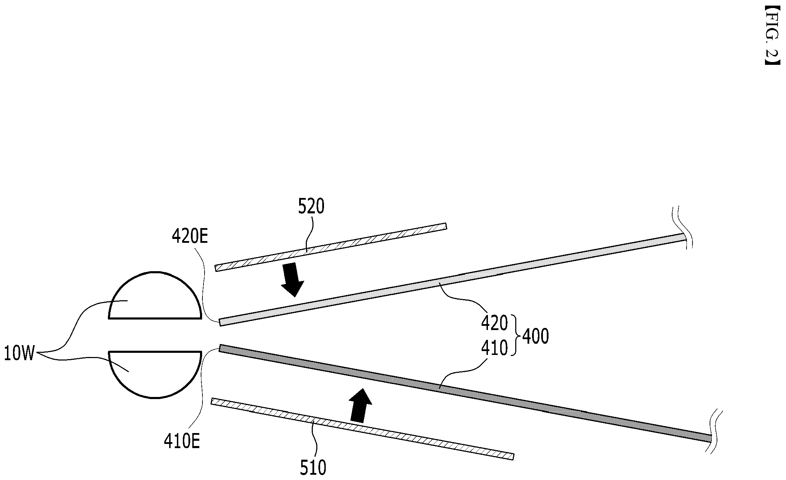

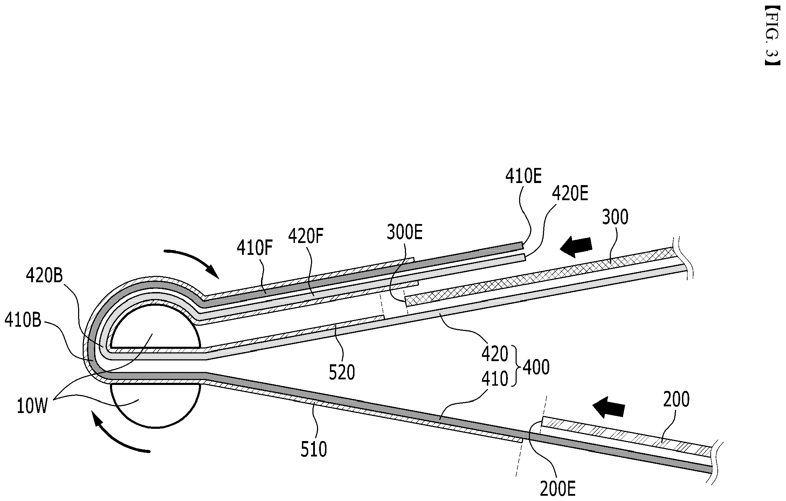

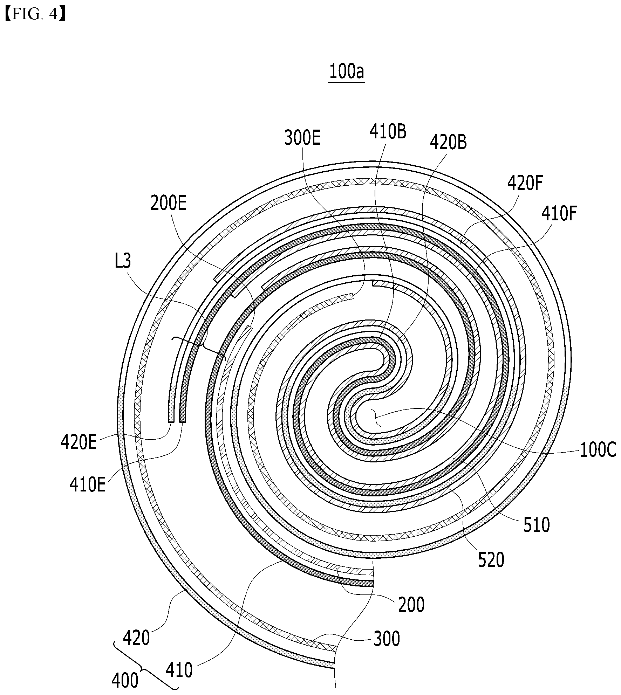

Figs. 2 and 3 are diagrams schematically illustrating a process of winding an electrode assembly according to one embodiment of the present disclosure. Fig. 4 is a plan view which enlarges and shows a core region of the electrode assembly manufactured by the process of Figs. 2 and 3.

Referring to Figs. 2 to 4, an electrode assembly 100a according to one embodiment of the present disclosure includes a cathode 200, an anode 300, and separators 400 located between the cathode 200 and the anode 300. The separators 400 include a first separator 410 located on one surface of the cathode 200 and a second separator 420 located on one surface of the anode 300. The cathode 200, the first separator 410, the anode 300, and the second separator 420 are wound together to form a jelly-roll structure. That is, the electrode assembly 100a according to the present embodiment is a jelly-roll type electrode assembly.

The cathode 200 and the anode 300 are not specifically shown, but as described above, the cathode 200 may include a cathode current collector and a cathode active material layer provided by applying a cathode active material onto both surfaces of the cathode current collector, and the anode 300 may include an anode current collector and an anode active material layer provided by applying an anode active material onto both surfaces of the anode current collector.

A first tape 510 and a second tape 520 may be attached to one surface of the first separator 410 and one surface of the second separator 420, respectively. The first tape 510 may be attached to a region between one end 410E of the first separator 410 and a point where the cathode 200 is inserted. The second tape 520 may be attached to a region between one end 420E of the second separator 420 and a point where the anode 300 is inserted. In the present specification, one end 410E of the first separator 410 means a portion of the first separator 410 that is first inserted into the winding core 10W, and one end 420E of the second separator 420 refers to a portion of the second separator 420 that is first inserted into the winding core 10W.

As shown in Fig. 2, while the first separator 410 and the second separator 420 are first inserted into the winding core 10W, the first tape 510 and the second tape 520 are attached to one surface of the first separator 410 and one surface of the second separator 420, respectively. Then, as shown in Fig. 3, the first separator 410 and the second separator 420 are folded to form a first folding part 410F and a second folding part 420F, respectively, and the anode 300 and the cathode 200 are sequentially inserted to perform final winding. As described above, one end 410E of the first separator 410 and one end 420E of the second separator 420 correspond to portions first inserted into the winding core 10W. The first folding part 410F and the second folding part 420F will be described again later.

The cathode 200 is inserted and wound after the first separator 410. As shown in Figs. 2 and 3, the first tape 510 may be attached to the first separator 410 before the cathode 200 is inserted. Therefore, based on the wound jelly-roll structure, the first tape 510 may be attached to a region between one end 410E of the first separator 410 and a point where the cathode 200 is inserted. In other words, the first tape 510 may be attached to a region between the edge part 200E of the cathode 200 and the point of the first separator 410 corresponding thereto at one end 410E of the first separator 410.

Similar to the above, the anode 300 is inserted and wound after the second separator 420. As shown in Figs. 2 and 3, the second tape 520 may be attached to the second separator 420 before the anode 300 is inserted. Therefore, based on the wound jelly-roll structure, the second tape 520 may be attached to a region between one end 420E of the second separator 420 and a point where the anode 300 is inserted. In other words, the second tape 520 may be attached to a region between the edge part 300E of the anode 300 and the point of the second separator 420 corresponding thereto at one end 420E of the second separator 420.

Unlike the above, if the first tape 510 overlaps with the point where the cathode 200 is inserted or the second tape 520 overlaps with the point where the anode 300 is inserted, the overlapping part covers the separators 400, and thus, the cathode 200 portion or the anode 300 portion corresponding thereto become an unreacted zone, which leads to a problem the battery capacity is reduced.

Meanwhile, the first tape 510 may be attached to one of both surfaces of the first separator 410 in a direction opposite to the direction in which the second separator 420 is located, and the second tape 520 may be attached to one of both surfaces of the second separator 420 in a direction opposite to the direction in which the first separator 410 is located. That is, when the first separator 410 and the second separator 420 are inserted, the first tape 510 and the second tape 520 may be attached to opposite surfaces of the first separator 410 and the second separator 420 rather than the surface facing each other. Instead of providing a separate process for attaching the first tape 510 and the second tape 520, this is a method in which the first tape 510 and the second tape 520 are attached at the same time while the first separator 410 and the second separator 420 are inserted into the winding core as shown in Fig. 2. Therefore, it is preferable in terms of the process to attach the first tape 510 and the second tape 520 to opposite surfaces of the first separator 410 and the second separator 420 rather than the surfaces facing each other.

The attachment method of the first tape 510 and the second tape 520 is not particularly limited, but as an example, a method of cutting the first tape 510 and the second tape 520, then transferring them to an adsorber using vacuum or low pressure, and attaching them to the first separator 410 and the second separator 420, respectively, can be applied.

The first tape 510 and the second tape 520 may include an electrically insulating material, and a material that is resistant to heat shrinkage is preferable. In one example, the first tape 510 and the second tape 520 may include a polypropylene or polyethylene material.

As described above, the cathode 200 and the anode 300 repeat expansion and contraction during the charging and discharging process, which may cause deformation of the core 100C of the j elly-roll structure. Here, the core 100C of the j elly-roll structure means the core of the circular structure when the jelly-roll type electrode assembly 100a is viewed in the height direction, as shown in Fig. 4.

In particular, when the electrode assembly according to the present embodiment is a tab-less electrode assembly, it does not have a separate member for supporting the core 100C of the jelly-roll structure like the cathode tab and the anode tab, and thus, the problem of core deformation may be more serious. In addition, as the first separator 410 and the second separator 420 are first inserted, the core 100C of the jelly-roll structure is mainly composed of a first separator 410 and a second separator 420, wherein the first separator 410 and the second separator 420 are thin films that do not have a predetermined strength, and thus, they are not structured to withstand stress.

Therefore, the electrode assembly 100a according to the present embodiment has attempted to complement the structural rigidity of the jelly-roll structure against core deformation by attaching the first tape 510 and the second tape 520 to the regions adjacent to the core 100c of the jelly-roll structure among the first separator 410 and the second separator 420, respectively.

The attachment length of the first tape 510 and the second tape 520 is not particularly limited, but may be wound 0.5 to 4 times. If the first tape 510 and the second tape 520 are wound less than 0.5 times, it may be insufficient to withstand the internal stress, and if they are wound more than four times, the attachment point is overlapped with the insertion point of the cathode 200 or the anode 300, which causes a problem that the battery capacity is reduced.

Meanwhile, referring to Fig. 4 again, a region where separators 400 are overlapped in two or more layers exists between the edge part 200E of the cathode 200 and the anode 300 based on the radial direction of the jelly-roll structure. More specifically, a region where the separators 400 are overlapped in three layers exists between the edge part 200E of the cathode 200 and the anode 300. In Fig. 4, a point where the separator 400 is overlapped in three layers is indicated by L3. Unlike that shown in Fig. 4, either the first separator 410 or the second separator 420 may be formed relatively short so that two layers are overlapped, and an additional separator may be interposed so that the separators are overlapped in four or more layers.

In this specification, the edge part 200E of the cathode 200 means one end of the cathode 200 that is first inserted for winding, and the edge part 300E of the anode 300 means one end of the anode 300 that is first inserted for winding. Further, the radial direction of the jelly-roll structure means a direction from the core 100C of the jelly-roll structure to an outer point of the jelly-roll structure.

In the jelly-roll structure, the edge part 300E of the anode 300 may be located closer to the core 100C of the jelly-roll structure than the edge part 200E of the cathode 200. In other words, as shown in Fig. 3, the anode 300 is inserted relatively early compared to the cathode 200 during the winding process. Thereby, the edge part 300E of the anode 300 may be located relatively closer to the core 100C of the jelly-roll structure.

During the charging process of the lithium secondary battery, lithium ions inside the cathode 200 flow into the electrolyte and then intercalated inside the anode 300 by a concentration gradient. That is, since lithium ions move from the cathode 200 to the anode 300, the area of the anode 300 should be preferably formed larger than the area of the cathode 200. If the cathode 200 has a larger area than the anode 300, a lithium precipitation reaction may occur on the surface to which lithium ions correspond. Precipitated lithium may cause a short circuit inside the cathode and anode. Therefore, it is preferable that the anode 300 has a larger area than the cathode 200 and that the anode 300 is inserted before the cathode 200 even in a jelly-roll structure. In addition, since the cathode active material layer is provided on both surfaces of the cathode 200, it is preferable that the anode 300 corresponding thereto be located on both surfaces of the cathode 200 as shown in Fig. 4.

At this time, as described above, a so-called free edge may be created in which the cathode active material portion is formed on the edge part 200E of the cathode 200. The edge part 200E of the cathode 200 creates a stepped structure, and as the cathode 200 repeats expansion and contraction, the edge part 200E of the cathode 200 can apply pressure to the vicinity. That is, damage may be applied to the separators 400 and the anode 300 wound first by the edge part 200E of the cathode 200. This may cause disconnection and crack generation of the separators 400 or the anode 300, and may cause a problem of internal short circuit between the cathode 200 and the anode 300.

Therefore, the electrode assembly 100a according to the present embodiment is configured such that the separators 400 are overlapped in two or more layers, particularly three layers, in the region adjacent to the edge part 200E of the cathode 200, thereby attempting to solve the above problem. That is, the separator 400 is set so as to cover the edge part 200E of the cathode 200 in three layers, thereby attempting to protecting other separators 400 or the anode 300 from the pressing force generated at the edge part 200E of the cathode 200.

Specifically, as shown in Fig. 3, in the electrode assembly 100a according to one embodiment of the present disclosure, the jelly-roll structure may be a wound shape in which the anode 300, the second separator 420, the cathode 200 and the first separator 410 are arranged in this order. In order to create a region where the separators 400 are overlapped in three layers between the edge part 200E of the cathode 200 and the anode 300, when inserting into the winding core 10W, the cathode 200 is inserted so as to be located between the first separator 410 and the second separator 420, and the anode 300 may be inserted to be located above the second separator 420. The arrangement may correspond to an arrangement form when the winding core 10W is wound in a clockwise direction.

More specifically, when manufacturing the electrode assembly 100a having a shape in which the anode 300, the second separator 420, the cathode 200 and the first separator 410 are arranged in this order and wound, the first separator 410 and the second separator 420 that have been first inserted can be folded in the winding direction as shown in Fig. 3 to form a first folding part 410F and a second folding part 420F. At this time, the winding direction is the direction in which the winding core 10W rotates, and as an example, it may be in clockwise direction as shown in Fig. 3.

The first separator 410 can be folded in a clockwise direction on the basis of the first boundary part 410B to form a first folding part 410F. The first boundary part 410B corresponds to a boundary part where the first separator 410 bends after passing between the winding cores 10W, and the first folding part 410F corresponds to a region between the first boundary part 410B and one end 410E of the first separator 410. That is, the first separator 410 may include a first folding part 410F folded in a winding direction, and the first folding part 410F may be wound together while overlapping with other portions of the first separator 410.

Similarly, the second separator 420 can be folded in a clockwise direction on the basis of the second boundary part 420B to form a second folding part 420F. The second boundary part 420B corresponds to the boundary part where the second separator 420 bends after passing between the winding cores 10W, and the second folding part 420F corresponds to a region between the second boundary part 420B and one end 420E of the second separator 420. That is, the second separator 420 may include a second folding part 420F folded in a winding direction, and the second folding part 420F may be wound together while overlapping with other portions of the second separator 420.

Thereby, as shown in Fig. 4, two-layer first separator 410 and one-layer second separator 420 are located between the edge part 200E of the cathode 200 and the anode 300. That is, in the above form, the separators 400 can be arranged in total three layers. More specifically, two layers of the three-layer separators 400 overlapped between the edge part 200E of the cathode 200 and the anode 300 have a first folding part 410F and a second folding part 420F. The remaining one layer may be a region of the first separator 410 rather than the first folding part 410F.

On the other hand, the electrode assembly 100a manufactured according to the above method may be configured such that a region in which the separators 400 are overlapped in two or more layers, particularly three layers, is located outside the edge part 200E of the cathode 200, based on the radial direction for the jelly-roll structure. The point indicated by L3 is located outside the edge part 200E of the cathode 200 based on the radial direction of the jelly-roll structure. That is, the region where the separators 400 are overlapped in three layers is located between the edge part 200E of the cathode 200 and the anode 300, but may be located farther than the edge part 200E of the cathode 200 from the core 100C of the jelly-roll structure.

A cathode active material layer is formed on both surfaces of the cathode 200, wherein among the both surfaces of the cathode 200, the surface in the direction of the core 100C of the jelly-roll structure corresponds to a back surface, and the opposite surface corresponds to a top surface. The electrode assembly 100a according to the present embodiment corresponds to a top surface reinforcement design of the cathode 200, in which the region where the separators 400 are overlapped in three layers is located on the top surface of the cathode 200.

Meanwhile, the first tape 510 may be attached to a region spaced apart from one end 410E of the first separator 410, and the second tape 520 may be attached to a region spaced apart from one end 420E of the second separator 420. More specifically, as shown in Fig. 4, the first tape 510 and the second tape 520 may be attached to regions spaced apart by a predetermined distance on the one end 410E of the first separator 410 and the one end 420E of the second separator 420, respectively, so that the first tape 510 and the second tape 520 are not attached to two or more layers of separator 400 portions (indicated by L3) covering the edge part 200E of the cathode 200. It is preferable that only the separator 400 is arranged without the first tape 510 and the second tape 520 between the edge part 200E of the cathode 200 and the anode 300 on the outside thereof.

If the first tape 510 or the second tape 520 is attached so as to cover the edge part 200E of the cathode 200, the portion of the cathode 200 as much as the region to which the first tape 510 or the second tape 520 is attached becomes an unreacted zone, so that the battery capacity is reduced. Unlike the same, the electrode assembly 100a according to the present embodiment can prevent the first tape 510 or the second tape 520 from being attached to the portion of two or more layers of separator 400 that covers the edge part 200E of the cathode 200, thereby configuring the entire top surface of the cathode 200 as a reaction region and increasing the capacity.

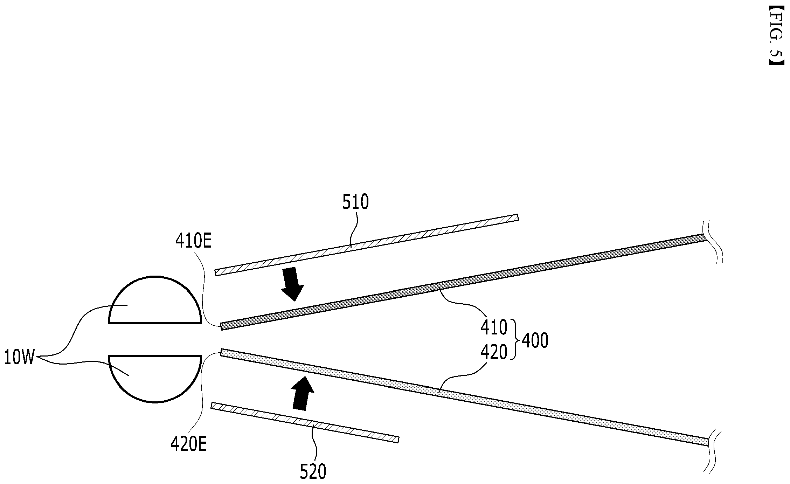

Next, an electrode assembly according to another embodiment of the present disclosure will be described in detail with reference to Figs. 5 to 7. However, the descriptions overlapping with the contents described above will be omitted.

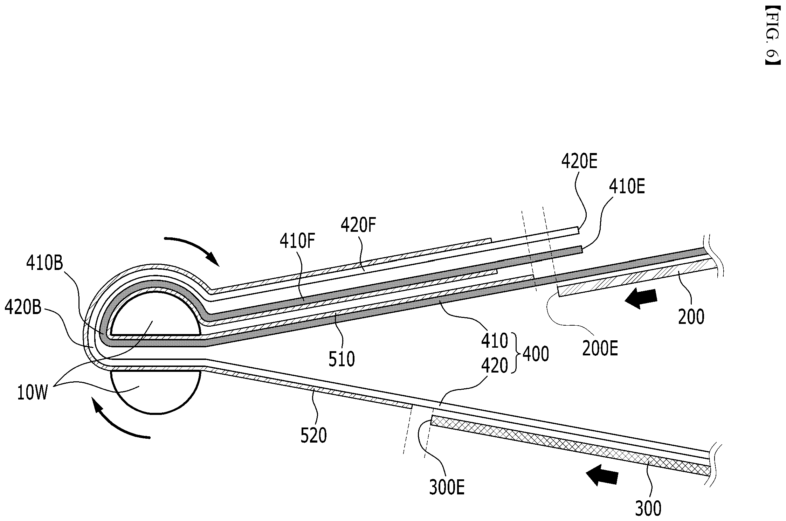

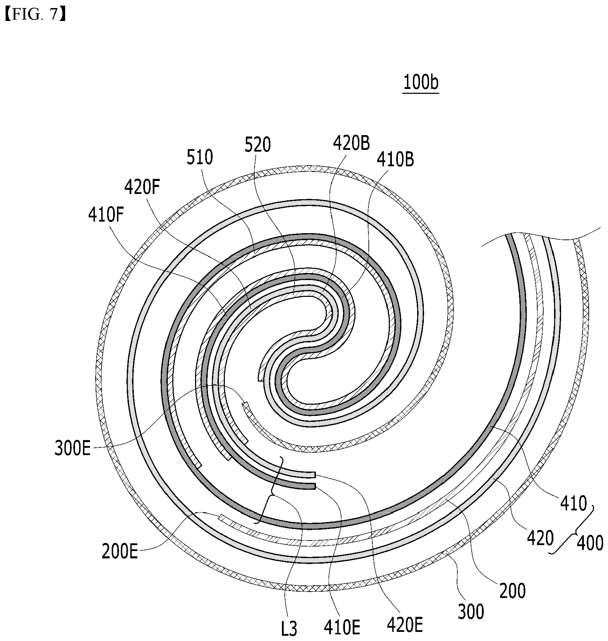

Figs. 5 and 6 are diagrams schematically showing a process of winding an electrode assembly according to another embodiment of the present disclosure. Fig. 7 is a plan view which enlarges and shows a core region of the electrode assembly manufactured by the process of Figs. 5 and 6.

Referring to Figs. 4 to 7, the electrode assembly 100b according to another embodiment of the present disclosure includes a cathode 200, an anode 300 and separators 400 located between the cathode 200 and the anode 300. Separators 400 include a first separator 410 located on one surface of the cathode 200 and a second separator 420 located on one surface of the anode 300. The cathode 200, the first separator 410, the anode 300, and the second separator 420 are wound together to form a jelly-roll structure. The first tape 510 and the second tape 520 may be attached to one surface of the first separator 410 and one surface of the second separator 420, respectively. The attachment form of the first tape 510 and the second tape 520 overlaps with the contents described above, and thus a description thereof will be omitted.

Based on the radial direction of the jelly-roll structure, a region in which separators 400 are overlapped in two or more layers exists between the edge part 200E of the cathode 200 and the anode 300. In Fig. 7, the point where the separators 400 are overlapped in three layers is indicated by L3.

At this time, as shown in Fig. 6, in the electrode assembly 100b according to one embodiment of the present disclosure, the j elly-roll structure may be a wound shape in which the first separator 410, the cathode 200, the second separator 420, and the anode 300 are arranged in this order. In order to create a region where the separators 400 are overlapped in three layers between the edge part 200E of the cathode 200 and the anode 300, when inserting the winding core 10W, the cathode 200 is inserted so as to be located between the first separator 410 and the second separator 420, and inserted so that the anode 300 is located under the second separator 420. The arrangement may correspond to an arrangement form when the winding core 10W is wound in a clockwise direction.

More specifically, when manufacturing the electrode assembly 100b in which the first separator 410, the cathode 200, the second separator 420, and the anode 300 are arranged in this order and wound, the first separator 410 and the second separator 420 can be folded in the winding direction, respectively, as shown in Fig. 6 to form a first folding part 410F and a second folding part 420F. At this time, the winding direction is the direction in which the winding core 10W rotates, and as an example, it may be in clockwise direction as shown in Fig. 6.

The first separator 410 can be folded in a clockwise direction on the basis of the first boundary part 410B to form a first folding part 410F. The first boundary part 410B corresponds to a boundary part where the first separator 410 bends after passing between the winding cores 10W, and the first folding part 410F corresponds to a region between the first boundary part 410B and one end 410E of the first separator 410. That is, the first separator 410 may include a first folding part 410F folded in a winding direction, and the first folding part 410F may be wound together while overlapping with other portions of the first separator 410.

Similarly, the second separator 420 can be folded in a clockwise direction on the basis of the second boundary part 420B to form a second folding part 420F. The second boundary part 420B corresponds to a boundary part where the second separator 420 bends after passing between the winding cores 10W, and the second folding part 420F corresponds to a region between the second boundary part 420B and one end 420E of the second separator 420. That is, the second separator 420 may include a second folding part 420F folded in a winding direction, and the second folding part 420F may be wound together while overlapping with other portions of the second separator 420.

Thereby, as shown in Fig. 7, a two-layer first separator 410 and a single-layer second separator 420 may be located between the edge part 200E of the cathode 200 and the anode 300 based on the radial direction of the jelly-roll structure. That is, in the above form, the separators 400 may be located in a total of three layers. More specifically, two layers of the three-layers separators 400 overlapped between the edge part 200E of the cathode 200 and the anode 300 may be a first folding part 410F and a second folding part 420F. The remaining one layer may be a region of the first separator 410 rather than the first folding part 410F.

Meanwhile, the electrode assembly 100b manufactured according to the above method may be configured such that a region in which the separator 400 is overlapped in two or more layers, particularly three layers, may be located inside the edge part 200E of the cathode 200 based on the radial direction of the jelly- roll structure. The point indicated by L3 is located inside the edge part 200E of the cathode 200 based on the radial direction of the jelly-roll structure. That is, the region where the separators 400 are overlapped in three layers is located between the edge part 200E of the cathode 200 and the anode 300, but may be located closer than the edge part 200E of the cathode 200 from the core 100C of the jelly-roll structure.

As described above, the cathode active material layer is formed on both surfaces of the cathode 200, and among the both surfaces of the cathode 200, the surface in the direction of the core 100C of the jelly-roll structure corresponds to the back surface, and the opposite surface corresponds to the top surface. The electrode assembly 100b according to the present embodiment corresponds to a design for reinforcing the back surface of the cathode 200, in which the region where the separators 400 are overlapped in three layers is located on the back surface of the cathode 200.

Taken together, the form is common in which the edge part 200E of the cathode 200 is set so that the separator 400 covers in three layers to protect the other separators 400 and the anode 300, but in the electrode assembly 100a of the embodiment of Figs. 2 to 4, the region where the separators 400 are overlapped in two or more layers is provided outside the edge part 200E of the cathode 200, and the electrode assembly 100b of the embodiment of Figs. 5 and 6 is different in that the region where the separators 400 are overlapped in two or more layers is provided inside the edge part 200E of the cathode 200.

Meanwhile, the first tape 510 may be attached to a region spaced apart from one end 410E of the first separator 410, and the second tape 520 may be attached to a region spaced apart from one end 420E of the second separator 420. More specifically, as shown in Fig. 7, in order to prevent the first tape 510 and the second tape 520 from being attached to the portion (indicated by L3) of the two or more layers of separators 400 covering the edge parti 200E of the cathode 200, the first tape 510 and the second tape 520 are attached to regions spaced apart from one end 410E of the first separator 410 and one end 420E of the second separator 420 by a predetermined distance, respectively. In other words, it is preferable that only the separators 400 are located without the first tape 510 and the second tape 520 between the edge part 200E of the cathode 200 and the anode 300 on the inside thereof.

If the first tape 510 or the second tape 520 is attached so as to cover the edge part 200E of the cathode 200, the portion of the cathode 200 corresponding to the region to which the first tape 510 or the second tape 520 is attached becomes an unreacted zone, so that the battery capacity is reduced. Unlike the same, the electrode assembly 100b according to the present embodiment can prevent the first tape 510 or the second tape 520 from being attached to the portion of the two or more layers of separators 400 that cover the edge part 200E of the cathode 200, thereby configuring all of the back surface of the cathode 200 as a reaction area and increasing the capacity.

Meanwhile, the electrode assemblies 100a and 100b according to the present embodiment may be housed in a cylindrical can, a prismatic can, or a pouch case to form a secondary battery.

The terms representing directions such as the front side, the rear side, the left side, the right side, the upper side, and the lower side have been used in the present embodiment, but the terms used are provided simply for convenience of description and may become different according to the position of an object, the position of an observer, or the like.

A plurality of secondary batteries according to the present embodiment may be gathered to form a battery module. The battery module may be mounted together with various control and protection systems such as a BMS (battery management system) and a cooling system to form a battery pack.

The secondary battery, the battery module, or the battery pack can be applied to various devices. Such a device can be applied to a vehicle means such as an electric bicycle, an electric vehicle, or a hybrid vehicle, but the present disclosure is not limited thereto, and is applicable to various devices that can use a secondary battery.

Although preferred embodiments of the present disclosure have been shown and described above, the scope of the present disclosure is not limited thereto, and numerous changes and modifications can be devised by those skilled in the art using the principles of the invention defined in the appended claims, which also falls within the spirit and scope of the present disclosure.

### [Description of Reference Numerals]

100a, 100b: electrode assembly
200: cathode
300: anode
410: first separator
420: second separator
510: first tape
520: second tape

## Claims

1. An electrode assembly comprising:
a cathode;
an anode; and
separators located between the cathode and the anode,
wherein the separators include a first separator located on one surface of the cathode and a second separator located on one surface of the anode,
wherein the cathode, the first separator, the anode, and the second separator are wound together to form a jelly-roll structure, and
wherein based on the radial direction of the jelly-roll structure, a region in which the separators are overlapped in two or more layers exists between the edge part of the cathode and the anode.

2. The electrode assembly of claim 1, wherein:
based on the radial direction of the jelly-roll structure, a region in which the separators are overlapped in three layers exists between the edge part of the cathode and the anode.

3. The electrode assembly of claim 1, wherein:
a first tape and a second tape are attached to one surface of the first separator and one surface of the second separator, respectively,
the first tape is attached to a region between one end of the first separator and a point where the cathode is inserted, and
the second tape is attached to a region between one end of the second separator and a point where the anode is inserted.

4. The electrode assembly of claim 3, wherein:
the first tape is attached to a region spaced apart from one end of the first separator, and the second tape is attached to a region spaced apart from one end of the second separator.

5. The electrode assembly of claim 3, wherein:
the first tape is attached to one surface of both surfaces of the first separator in a direction opposite to a direction in which the second separator is located.

6. The electrode assembly of claim 3, wherein:
the second tape is attached to one surface of both surfaces of the second separator in a direction opposite to the direction in which the first separator is located.

7. The electrode assembly of claim 3, wherein:
the first tape and the second tape include an electrically insulating material.

8. The electrode assembly of claim 1, wherein:
based on the radial direction of the jelly-roll structure, a two-layer first separator and a single layer second separator are located between the edge part of the cathode and the anode.

9. The electrode assembly of claim 1, wherein:
the first separator includes a first folding part folded in a winding direction, and the first folding part is overlapped with other parts of the first separator to be wound together; and
the second separator includes a second folding part folded in a winding direction, and the second folding part is overlapped with other parts of the second separator to be wound together.

10. The electrode assembly of claim 9, wherein:
based on the radial direction of the jelly-roll structure, the separators are overlapped in three layers between the edge part of the cathode and the anode, and
two layers of the three-layers separators overlapped between the edge part of the cathode and the anode are the first folding part and the second folding part, respectively.

11. The electrode assembly of claim 1, wherein:
in the jelly-roll structure, the edge part of the anode is located closer to the core of the jelly-roll structure than the edge part of the cathode.

12. The electrode assembly of claim 1, wherein:
the jelly-roll structure has a wound shape in which the anode, the second separator, the cathode, and the first separator are arranged in this order.

13. The electrode assembly of claim 12, wherein:
based on the radial direction of the jelly-roll structure, a region where the separators are overlapped in two or more layers is located outside the edge part of the cathode.

14. The electrode assembly of claim 1, wherein:
the jelly-roll structure is a wound shape in which the first separator, the cathode, the second separator, and the anode are arranged in this order.

15. The electrode assembly of claim 14, wherein:
based on the radial direction of the jelly-roll structure, a region in which the separators are overlapped in two or more layers is located inside the edge part of the cathode.

16. A secondary battery comprising the electrode assembly of claim 1.
